# EUROPEAN PATENT SPECIFICATION

(11) **EP 4 043 813 B1**
(45) Date of publication and mention of the grant of the patent: **10.09.2025**
(21) Application number: 20873673.6
(22) Date of filing: 06.10.2020
(51) Int. Cl.: F25B 5/02, F25B 41/48, F25B 1/00, B60H 1/32, H01M 10/613, H01M 10/651, H01M 10/6556, H01M 10/6568, H01M 10/6569, F25B 49/02, H01M 10/625, H01M 10/633

(54) **COOLING DEVICE**
KÜHLVORRICHTUNG
DISPOSITIF DE REFROIDISSEMENT

(30) Priority: 08.10.2019 JP 2019185310
(43) Date of publication of application: 17.08.2022
(73) Proprietor: Valeo Japan Co., Ltd., Kumagaya-Shi SAITAMA 360-0193 (JP)
(72) Inventor: LEE, Seungji, Kumagaya-shi Saitama 360-0193 (JP); KURAHASHI, Kazuya, Kumagaya-shi Saitama 360-0193 (JP); WANG, Mingdi, Kumagaya-shi Saitama 360-0193 (JP); TAKAHASHI, Osamu, Kumagaya-shi Saitama 360-0193 (JP)
(74) Representative: Valeo Powertrain Systems
(86) International application number: PCT/JP2020/037841
(87) International publication number: WO 2021/070808

(56) References cited:
- EP-A1- 2 881 270
- EP-A1- 2 960 979
- JP-A- 2001 227 845
- JP-A- 2014 127 325
- JP-A- 2015 096 416
- JP-A- 2015 161 457
- JP-A- H0 821 666

## Description

### Technical Field

The present invention relates to a cooling apparatus which cools a plurality of batteries for a vehicle.

### Background Art

A battery which is mounted on a vehicle is such that when the battery is charged, a relatively large amount of power is applied thereto, and thereby the battery generates heat. When the battery thermally deteriorates due to the heat generation, there is a possibility that the life of product thereof is shortened. Thus, cooling of the battery is carried out. PTL 1 discloses a cooling apparatus for cooling the battery.

The cooling apparatus of PTL 1, having a plurality of heat exchange units, can cool a plurality of batteries at the same time. The cooling apparatus is connected to a refrigeration cycle, and when carrying out the cooling of the batteries, a refrigerant used in the refrigeration cycle flows into each of the heat exchange units of the cooling apparatus. The refrigerant having exchanged heat with each of the heat exchange units flows out from the cooling apparatus and is directed to the refrigeration cycle.

In the meantime, adjustment of the amount of refrigerant flowing through the heat exchange units is carried out by controlling the opening degree of an expansion valve provided upstream of the heat exchange units. Specifically, the state of the refrigerant having flowed out from the heat exchange units is detected, and when the refrigerant is in a gas-liquid mixture state, the valve opening degree of the expansion valve is made low. On the other hand, when the refrigerant having flowed out from the heat exchange units is all vaporized and furthermore has a degree of superheat of a predetermined value or higher, the valve opening degree of the expansion valve is made high.

As in the cooling apparatus described in PTL 1, in a cooling apparatus having a plurality of heat exchange units, it is desirable to control the valve opening degree of the expansion valve in such a way that states of the refrigerant flowing out from the plurality of heat exchange units are detected and the refrigerant flowing out from any one of the heat exchange units does not have a degree of superheat of the predetermined value or higher. However, when a detection device is provided for each of the plurality of heat exchange units, the product cost of the cooling apparatus increases.

A refrigerant circuit of a hybrid or electric vehicle, comprising a refrigerant distributor, is disclosed in PTL 2.

### Citation List

### Patent Literature

PTL 1: EP2945219
PTL 2: EP2881270

### Summary of Invention

### Technical Problem

The present invention has for its object to provide a cooling apparatus which, while lowering the product cost thereof, can appropriately adjust the flow volume of refrigerant flowing through a plurality of heat exchange units.

### Solution to Problem

According to the present invention there is provided a cooling apparatus according to claim 1.

The cooling apparatus, being connected to a refrigeration cycle, cools a plurality of batteries for a vehicle, includes a refrigerant lead-in portion which leads in a refrigerant which exchanges heat with the batteries; an expansion device which expands the refrigerant led in from the refrigerant lead-in portion; a refrigerant distribution device which, having an expanded refrigerant inflow portion into which the refrigerant having expanded in the expansion device flows and a plurality of distributed refrigerant outflow portions, distributes the refrigerant having flowed in from the expanded refrigerant inflow portion to the plurality of distributed refrigerant outflow portions; a plurality of upstream refrigerant flow paths connected respectively to the plurality of distributed refrigerant outflow portions of the refrigerant distribution device; a plurality of heat exchange units which, being connected respectively to the plurality of upstream refrigerant flow paths, carry out heat exchange between the refrigerants flowing through the respective heat exchange units and the corresponding batteries; a plurality of downstream refrigerant flow paths which are connected respectively to the plurality of heat exchange units and into which the refrigerants heat exchanged with the batteries flow; and a refrigerant converging device which has a converged refrigerant outflow portion which, having a plurality of converging refrigerant inflow portions connected respectively to the plurality of downstream refrigerant flow paths, converges the refrigerants having flowed through the plurality of downstream refrigerant flow paths and also causes the converged refrigerant to flow out to the refrigeration cycle, wherein the cooling apparatus is characterized in that the plurality of distributed refrigerant outflow portions, the plurality of upstream refrigerant flow paths, the plurality of downstream refrigerant flow paths, or the plurality of converging refrigerant inflow portions are formed in such a way that the flow volume of refrigerant in one heat exchange unit, out of the plurality of heat exchange units, is smaller than the flow volume of refrigerant in another heat exchange unit, and that the downstream refrigerant flow path connected to the one heat exchange unit is provided with a downstream detection device which detects the temperature, or the temperature and pressure, of the refrigerant in the said downstream refrigerant flow path.

### Advantageous Effects of Invention

According to the present invention, it is possible to provide the cooling apparatus which, while lowering the product cost thereof, can appropriately adjust the flow volume of refrigerant flowing through a plurality of heat exchange units.

### Brief Description of Drawings

[Fig. 1] Fig. 1 is a perspective view of a cooling apparatus according to one embodiment of the present invention.
[Fig. 2] Fig. 2 is a view schematically showing the configuration of the cooling apparatus shown in Fig. 1.
[Fig. 3] Fig. 3 a schematic side view of a heat exchange unit shown in Fig. 1.
[Fig. 4] Fig. 4 is an exploded perspective view showing connection portions of refrigerant flow paths shown in Fig. 1 and a narrowing portion.
[Fig. 5] Fig. 5 is a longitudinal sectional view showing the status in which the connection portions shown in Fig. 4 are connected together.
[Fig. 6] Fig. 6 is a circuit diagram showing one example of a refrigeration cycle to which is connected the cooling apparatus shown in Fig. 1.

### Description of Embodiments

Hereinafter, a description will be given, with reference to the accompanying drawings, of one embodiment of the present invention.

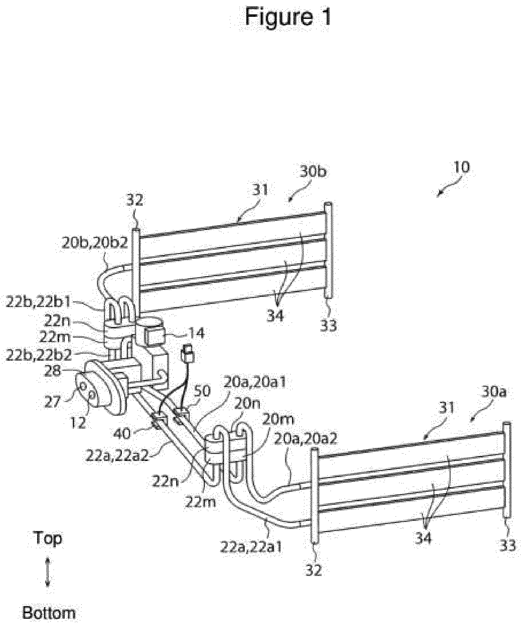

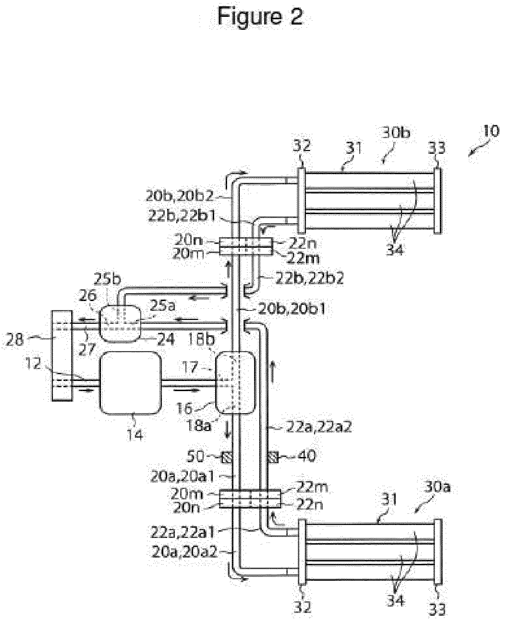

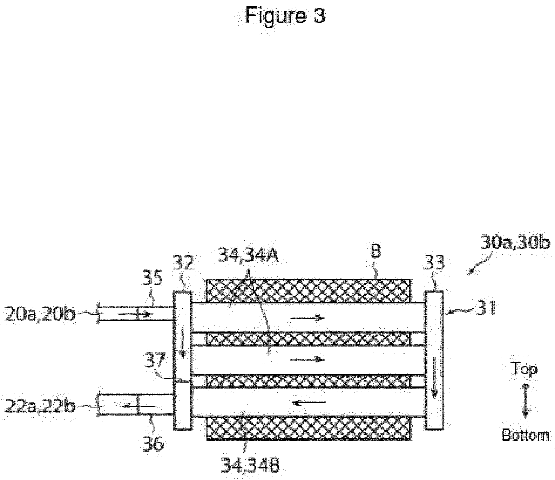

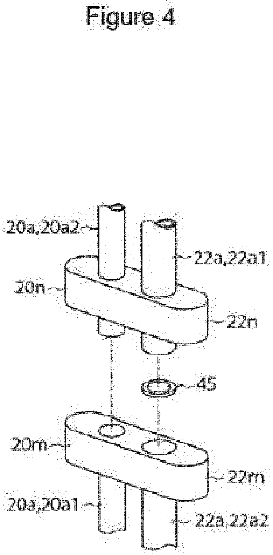

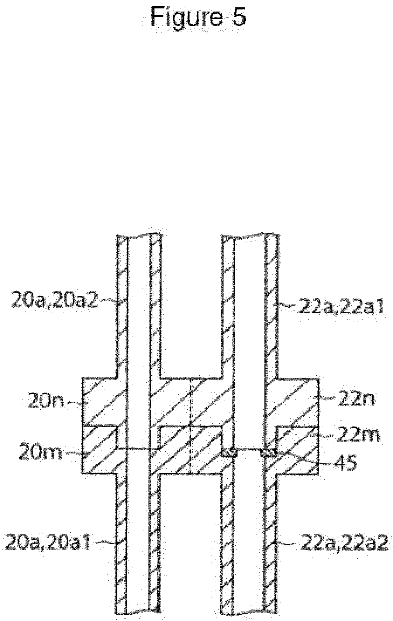

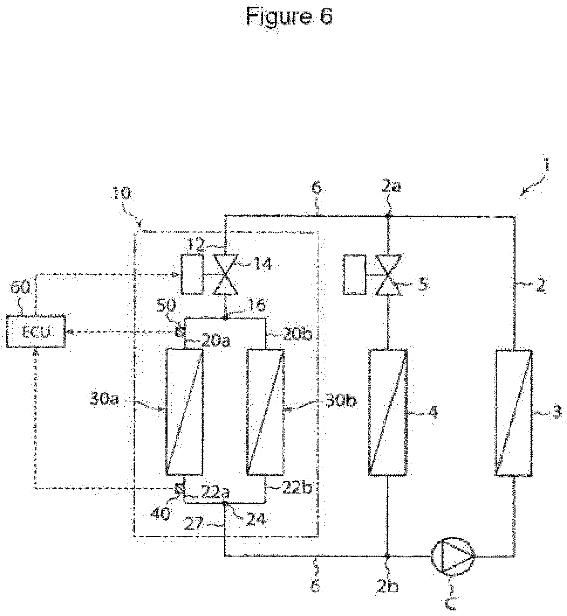

Fig. 1 is a perspective view of a cooling apparatus according to the one embodiment of the present invention. Fig. 2 is a view schematically showing the configuration of the cooling apparatus shown in Fig. 1. Fig. 3 is a schematic side view of a heat change unit shown in Fig. 1. Fig. 4 is an exploded perspective view showing connection portions of refrigerant flow paths shown in Fig. 1 and a narrowing portion. Fig. 5 is a longitudinal sectional view showing the status in which the connection portions shown in Fig. 4 are connected together. Fig. 6 is a circuit diagram showing one example of a refrigeration cycle to which is connected the cooling apparatus shown in Fig. 1.

The arrows described in Figs. 1 to 6 show refrigerant flows and conditions. The terms "upstream" and "downstream" in the present description mean respectively "upstream" and "downstream" based on a refrigerant flow direction.

A cooling apparatus 10 is an apparatus which cools a plurality of batteries B for a vehicle. The cooling apparatus 10 is connected to a refrigeration cycle 1, as shown in Fig. 6. Then, a heating medium used in the refrigeration cycle 1, as a refrigerant, flows inside the cooling apparatus 10. The refrigerant exchanges heat with the batteries B, and thereby the cooling apparatus 10 can cool the batteries B.

The refrigerant is a fluid which takes heat, which is equivalent to the vaporization heat at the time of phase transition from a liquid phase to a gas phase, from an object to be cooled and thereby cools the object to be cooled. Specifically, a refrigerant for a vehicle air conditioning system, for example, HFC-134a which has heretofore been widely used or HFO-1234yf which conforms to the recent EU regulations, can be used as the refrigerant.

The cooling apparatus 10 includes a refrigerant lead-in portion 12, an expansion device 14, a refrigerant distribution device 16, a plurality of upstream refrigerant flow paths 20a, 20b, a plurality of heat exchange units 30a, 30b, a plurality of downstream refrigerant flow paths 22a, 22b, a refrigerant converging device 24, and a refrigerant lead-out portion 27, wherein a refrigerant led in from the refrigeration cycle 1 flows in the cooling apparatus 10 in this order. Also, the cooling apparatus 10 preferably includes a connector 28 which includes the refrigerant lead-in portion 12 and the refrigerant lead-out portion 27, as shown in Figs. 1 and 2. It can facilitate the operation of connection to the refrigeration cycle 1.

The refrigerant lead-in portion 12 is a refrigerant flow path to be connected to the refrigeration cycle 1. In Fig. 2, the refrigerant lead-in portion 12 is shown as a pipeline, but the configuration is not limited to this. For example, when the connector 28 and the expansion device 14 are directly connected to each other but not via a pipeline, a through-hole formed in the connector 28 acts as the refrigerant lead-in portion 12. The refrigerant flowing through the refrigeration cycle 1 is led into the cooling apparatus 10 through the refrigerant lead-in portion 12.

The expansion device 14 is, for example, an electronic expansion valve. The expansion device 14 expands the refrigerant led in from the refrigerant lead-in portion 12. The valve opening degree of the expansion device 14 is adjustable, and the flow volume of refrigerant corresponding to the valve opening degree flows out from the expansion device 14 to the refrigerant distribution device 16. The valve opening degree of the expansion device 14 is controlled by an ECU (Electronic Control Unit) 60, as shown in Fig. 6.

The refrigerant distribution device 16 distributes the refrigerant having expanded in the expansion device 14 to the plurality of upstream refrigerant flow paths 20a, 20b. Specifically, as shown in Fig. 2, the refrigerant distribution device 16, having an expanded refrigerant inflow portion 17, into which the refrigerant having expanded in the expansion device 14 flows, and a plurality of distributed refrigerant outflow portions 18a, 18b, distributes the refrigerant, which has flowed in from the expanded refrigerant inflow portion 17, to the plurality of distributed refrigerant outflow portions 18a, 18b. The plurality of upstream refrigerant flow paths 20a, 20b are connected to the plurality of distributed refrigerant outflow portions 18a, 18b, respectively.

The plurality of upstream refrigerant flow paths 20a, 20b are disposed between the refrigerant distribution device 16 and the respective plurality of heat exchange units 30a, 30b. The upstream end portions of the plurality of upstream refrigerant flow paths 20a, 20b are connected respectively to the plurality of distributed refrigerant outflow portions 18a, 18b of the refrigerant distribution device 16. Also, the downstream end portions of the plurality of upstream refrigerant flow paths 20a, 20b are connected to the plurality of heat exchange units 30a, 30b, respectively. In the illustrated example, the upstream refrigerant flow paths 20a, 20b have first upstream refrigerant flow paths 20a1, 20b1, the upstream end portions of which are connected to the distributed refrigerant outflow portions 18a, 18b, and second upstream refrigerant flow paths 20a2, 20b2, the downstream end portions of which are connected to the heat exchange units 30a, 30b, respectively. As shown in Figs. 4 and 5, female fitting portions 20m are formed one at each of the downstream end portions of the first upstream refrigerant flow paths 20a1, 20b1. Also, male fitting portions 20n are formed one at each of the upstream end portions of the second upstream refrigerant flow paths 20a2, 20b2. Then, the female fitting portions 20m and the male fitting portions 20n are fitted together, and thereby the first upstream refrigerant flow path 20a1, 20b1 and the corresponding second upstream refrigerant flow path 20a2, 20b2 form one respective upstream refrigerant flow path 20a, 20b.

The plurality of heat exchange units 30a, 30b are connected to the respective upstream refrigerant flow paths 20a, 20b. The heat exchange units 30a, 30b each include one heat exchanger 31 or more (one in the illustrated example). As well shown in Fig. 3, the heat exchanger 31 has a first header (manifold) 32, a second header (manifold) 33, which are each configured as a hollow tubular member, and a plurality (three in the illustrated example) of tubes 34 disposed between the first header 32 and the second header 33.

The plurality of tubes 34 are disposed in a vertical direction, and the flow paths of the individual tubes 34 extend in a horizontal direction. Preferably, first tubes 34A are above a second tube 34B. The first header 32 and the second header 33 are disposed parallel to each other and in the vertical direction.

The first header 32 has a refrigerant inflow portion (inlet port) 35, to which the downstream end portion of the corresponding upstream refrigerant flow path 20a, 20b is connected and into which the refrigerant which exchanges heat with the battery B flows, and a refrigerant outflow portion (outlet port) 36, from which the refrigerant having exchanged heat with the battery B flows out. The inside of the first header 32 is divided by a partition wall 37 into an upper space on the refrigerant inflow portion 35 side and a lower space on the refrigerant outflow portion 36 side.

The plurality of tubes 34 are divided into one or more first tubes 34A, through which to cause the refrigerant to flow from the first header 32 toward the second header 33, and one second tube 34B or more, through which to cause the refrigerant to flow from the second header 33 toward the first header 32. In the example shown in Figs 1 to 3, each of the heat exchangers 31 is provided with two first tubes 34A and one second tube 34B. The end portions of the first tubes 34A on the first header 32 side are connected to the upper space on the refrigerant inflow portion 35 side. Also, the end portion of the second tube 34B on the first header 32 side is connected to the lower space on the refrigerant outflow portion 36 side. In this kind of heat exchanger 31, the refrigerant having flowed into the upper space of the first header 32 flows through the two first tubes 34A in parallel, and after flowing into the second header 33, flows through the second tube 34B, and flows into the lower space of the first header 32.

The tubes 34, first header 32, and second header 33 of the heat exchanger 31 can be formed of a high thermal conductivity material, for example, aluminum alloy. Also, for production technical reasons (extrusion die cost, uniformity of brazing, and the like), it is preferred that the plurality of tubes 34 have the same shape and size. The respective side surfaces of the tubes 34 come into direct or indirect (preferably, direct) thermal contact with the corresponding surfaces of the battery B (battery module).

In Fig. 3, the area of a portion in which each of the tubes 34 (34A, 34B) is superimposed on the battery B (a portion of the battery B behind the tubes 34) is the area of the surface of heat exchange between one of the tubes 34 and the battery B (hereinafter also called the "heat exchange area"). In Fig. 3, the tubes 34 have the same shape and size, so that the heat exchange areas of the individual tubes take an equal value A ("A" is an appropriate positive number). Then, the heat exchange area of the whole heat exchanger 31 is 3A.

The heat exchange units 30a, 30b each act as an evaporator when the refrigerant passes through the inside thereof. That is, the refrigerant having come out of the expansion device 14, when flowing into the upper space of the first header 32, is in a liquid state or in a gas-liquid mixture state in which the refrigerant includes an adequate amount of liquid, but when passing through the heat exchange units 30a, 30b, exchanges heat with the batteries B, thereby evaporates, and takes heat from the batteries B due to the heat of vaporization. It is desirable that the flow volume of refrigerant flowing through the heat exchange units 30a, 30b is adjusted in such a way that the refrigerant, when passing through the second tube 34B, almost all evaporates and also never has a degree of superheat of a predetermined value or higher. This is because when the flow volume of refrigerant flowing through the heat exchange units 30a, 30b is too small and all the refrigerant, before passing through the second tube 34B, evaporates and also has a degree of superheat of a predetermined value or higher, the refrigerant cannot sufficiently cool the batteries B. Also, this is because when the flow volume of refrigerant flowing through the heat exchange units 30a, 30b is too large and most of the refrigerant does not evaporate and remains liquid in the heat exchange units 30a, 30b, there is a possibility that a large amount of liquid refrigerant is sucked in by a compressor C of the refrigeration cycle 1, to be described later, causing a problem with the compressor C.

The plurality of downstream refrigerant flow paths 22a, 22b are disposed between the respective plurality of heat exchange units 30a, 30b and the refrigerant converging device 24, as shown in Fig. 2. The upstream end portions of the plurality of downstream refrigerant flow paths 22a, 22b are connected to the respective plurality of heat exchange units 30a, 30b (specifically, to the respective refrigerant outflow portions 36 of the first headers 32). Also, the downstream end portions of the plurality of downstream refrigerant flow paths 22a, 22b are connected to the refrigerant converging device 24. In the illustrated example, the downstream refrigerant flow paths 22a, 22b respectively have first downstream refrigerant flow paths 22a1, 22b1, the upstream end portions of which are connected to the heat exchange units 30a, 30b, and second downstream refrigerant flow paths 22a2, 22b2, the downstream end portions of which are connected to the refrigerant converging device 24. As shown in Figs. 4 and 5, male fitting portions 22n are formed one at each of the downstream end portions of the first downstream refrigerant flow paths 22a1, 22b1, and female fitting portions 22m are formed one at each of the upstream end portions of the second downstream refrigerant flow paths 22a2, 22b2. Then, the female fitting portions 22m and the male fitting portions 22n are fitted together, and thereby the first downstream refrigerant flow path 22a1, 22b1 and the corresponding second downstream refrigerant flow path 22a2, 22b2 form one respective downstream refrigerant flow path 22a, 22b.

The refrigerant converging device 24 converges the refrigerants having flowed through the plurality of downstream refrigerant flow paths 22a, 22b and causes the converged refrigerant to flow out to the refrigeration cycle 1. Specifically, as shown in Fig. 2, the refrigerant converging device 24 has a plurality of converging refrigerant inflow portions 25a, 25b which are connected to the downstream end portions of the plurality of downstream refrigerant flow paths 22a, 22b, respectively, and a converged refrigerant outflow portion 26 from which to cause the converged refrigerant to flow out.

The refrigerant lead-out portion 27 is a refrigerant flow path to be connected to the refrigeration cycle 1. In Fig. 2, the refrigerant lead-out portion 27 is shown as a pipeline, one end portion of which is connected to the converged refrigerant outflow portion 26 of the refrigerant converging device 24, but the configuration is not limited to this. For example, when the connector 28 and the expansion device 14 are directly connected to each other but not via a pipeline, a through-hole formed in the connector 28 acts as the refrigerant lead-out portion 27. The refrigerants having flowed through the plurality of heat exchange units 30a, 30b converge together in the refrigerant converging device 24, and after that, the converged refrigerant is led out to the refrigeration cycle 1 through the refrigerant lead-out portion 27.

In the meantime, as described above, when the flow volume of refrigerant flowing through the heat exchange units is too small and all the refrigerant evaporates (the degree of wetness of the refrigerant falls to 0%) before passing through the heat exchange units and furthermore has a degree of superheat of a predetermined value or higher, the refrigerant cannot sufficiently cool the batteries B. On the other hand, when the flow volume of refrigerant flowing through the heat exchange units is too large and a large amount of liquid refrigerant flows out from the heat exchange units and is sucked in by the compressor, there is a possibility that a problem occurs in the compressor. For this reason, it is desirable, in the cooling apparatus having the plurality of heat exchange units, that the flow volume of refrigerant flowing out from the expansion device is minimized in such a way that the refrigerant flowing out from any one of the heat exchange units does not have a degree of superheat of a predetermined value or higher. The degree of wetness and superheat of the refrigerant flowing out from one heat exchange unit can be detected by detecting and comparing both the temperature of the refrigerant flowing into the one heat exchange unit and the temperature of the refrigerant flowing out from the one heat exchange unit. Alternatively, the degree of wetness and superheat thereof can be detected by detecting the temperature and pressure of the refrigerant flowing out from the one heat exchange unit.

Here, even when batteries of the same specifications (that is, batteries, the calorific values of which are expected to be the same when charged under the same conditions) are used as the plurality of batteries to be cooled by the plurality of heat exchange units or even when the heat exchange areas of the plurality of heat exchange units are equal to each other, it sometimes happens that the refrigerants flowing through the plurality of heat exchange units do not come into a uniform state. This is because a slight bias may occur in the flow volume when the refrigerant which has come into the state of a two-phase mixture of gas and liquid by being adiabatically expanded in the expansion device 14 is distributed to the plurality of distributed refrigerant outflow portions 18a, 18b in the refrigerant distribution device 16. That is, when the flow volume of refrigerant flowing through any one of the plurality of heat exchange units 30a, 30b is not sufficient, the refrigerant sometimes comes into the state of having the degree of superheat only in the one heat exchange unit. Also, in this kind of case, the heat exchange unit in which the refrigerant comes into the state of having the degree of superheat is not necessarily one and the same. That is, under some circumstances, in one heat exchange unit, the refrigerant comes into the state of having the degree of superheat, while under other circumstances, in another heat exchange unit instead of in the one heat exchange unit, the refrigerant sometimes comes into the state of having the degree of superheat. This is because the proportion of distribution of refrigerant in the refrigerant distribution device 16 fluctuates easily when in a gas-liquid two-phase state. Consequently, in order not to allow the refrigerant flowing out from any heat exchange unit to have a degree of superheat of a predetermined value or higher, it is necessary to detect the state of the refrigerant flowing out from each heat exchange unit and based thereon to adjust the flow volume of refrigerant flowing through the plurality of heat exchange units. Specifically, it is necessary that all the plurality of downstream refrigerant flow paths connected one to each of the plurality of heat exchange units are provided one each with detection devices which detect the degree of wetness and superheat of the refrigerants flowing through the said respective downstream refrigerant flow paths, and that the valve opening degree of the expansion device is adjusted based on the results of detection by the detection devices. However, when the detection devices are provided one in each of the downstream refrigerant flow paths, the product cost of the cooling apparatus increases.

In consideration of these kinds of points, the cooling apparatus 10 according to the present embodiment is designed to make appropriate the flow volume of refrigerant flowing through the plurality of heat exchange units while lowering the product cost of the cooling apparatus 10 (specifically, to minimize the flow volume in such a way that the refrigerant flowing out from any heat exchange unit does not have a degree of superheat of a predetermined value or higher) .

Specifically, in the cooling apparatus 10 according to the present embodiment, the plurality of refrigerant flow paths 20a, 20b, 22a, 22b are formed in such a way that the flow volume of refrigerant in one heat exchange unit 30a, out of the plurality of heat exchange units 30a, 30b, is smaller than the flow volume of refrigerant in another heat exchange unit 30b. By so doing, when the flow volume of refrigerant flowing through the plurality of heat exchange units 30a, 30b is not sufficient, the refrigerant inevitably comes to have a degree of superheat of a predetermined value or higher in the one heat exchange unit 30a. Furthermore, a downstream detection device 40 for detecting the degree of wetness and superheat of the refrigerant flowing out from the one heat exchange unit 30a is provided in the downstream refrigerant flow path 22a connected to the one heat exchange unit 30a.

By configuring the cooling apparatus 10 in this way, when the flow volume of refrigerant flowing through the plurality of heat exchange units 30a, 30b is not sufficient, the refrigerant inevitably comes to have a degree of superheat of a predetermined value or higher in a specific heat exchange unit 30a. Then, by detecting the degree of wetness and superheat of the refrigerant flowing out from the specific heat exchange unit 30a and adjusting the valve opening degree of the expansion device 14 in such a way that the degree of wetness of the said refrigerant is 0% and that the degree of superheat thereof is not of a predetermined value or higher, the flow volume of refrigerant flowing through the plurality of heat exchange units 30a, 30b can be made appropriate even without providing detection devices, one each in all the downstream refrigerant flow paths 22a, 22b connected to all the respective heat exchange units 30a, 30b. Specifically, all the amounts of refrigerant flowing through the plurality of heat exchange units 30a, 30b can be reduced to a minimum amount which does not have a degree of superheat of a predetermined value or higher.

In the illustrated example, the cooling apparatus 10 is configured as follows in such a way that the flow volume of refrigerant in the one heat exchange unit 30a is smaller than the flow volume of refrigerant in the other heat exchange unit 30b. That is, the downstream refrigerant flow path 22a is formed in such a way that the minimum flow path cross-sectional area of the downstream refrigerant flow path 22a connected to the one heat exchange unit 30a and of the converging refrigerant inflow portion 25a connected to the said downstream refrigerant flow path 22a is smaller than the minimum flow path cross-sectional area of the downstream refrigerant flow path 22b connected to the other heat exchange unit 30b and of the converging refrigerant inflow portion 25b connected to the said downstream refrigerant flow path 22b. A configuration of the cooling apparatus 10 such that the flow volume of refrigerant in the one heat exchange unit 30a is smaller than the flow volume of refrigerant in the other heat exchange unit 30b is not limited to the above-described one. The upstream refrigerant flow path 20a may be formed in such a way that the minimum flow path cross-sectional area of the upstream refrigerant flow path 20a connected to the one heat exchange unit 30a and of the distributed refrigerant outflow portion 18a connected to the said upstream refrigerant flow path 20a is smaller than the minimum flow path cross-sectional area of the upstream refrigerant flow path 20b connected to the other heat exchange unit 30b and of the distributed refrigerant outflow portion 18b connected to the said upstream refrigerant flow path 20b.

In order that the minimum flow path cross-sectional area of the downstream refrigerant flow path 22a connected to the one heat exchange unit 30a and of the converging refrigerant inflow portion 25a connected to the said downstream refrigerant flow path 22a is made smaller than the minimum flow path cross-sectional area of the downstream refrigerant flow path 22b connected to the other heat exchange unit 30b and of the converging refrigerant inflow portion 25b connected to the said downstream refrigerant flow path 22b, a narrowing portion 45 which defines the minimum flow path cross-sectional area of the said downstream refrigerant flow path 22a and of the said converging refrigerant inflow portion 25a is provided in the downstream refrigerant flow path 22a connected to the one heat exchange unit 30a. When the minimum flow path cross-sectional area of the upstream refrigerant flow path 20a connected to the one heat exchange unit 30a and of the distributed refrigerant outflow portion 18a connected to the said upstream refrigerant flow path 20a is made smaller than the minimum flow path cross-sectional area of the upstream refrigerant flow path 20b connected to the other heat exchange unit 30b and of the distributed refrigerant outflow portion 18b connected to the said upstream refrigerant flow path 20b, a narrowing portion 45 which defines the minimum flow path cross-sectional area of the said upstream refrigerant flow path 20a and of the said distributed refrigerant outflow portion 18a only has to be provided in the upstream refrigerant flow path 20a connected to the one heat exchange unit 30a.

However, according to the findings obtained by the inventors of the present invention, when the narrowing portion 45 is provided downstream of the one heat exchange unit 30a (in the downstream refrigerant flow path 22a), it is possible to appropriately adjust the flow volume of refrigerant flowing through the plurality of heat exchange units 30a, 30b, as compared with when the narrowing portion 45 is provided upstream of the one heat exchange unit 30a (in the upstream refrigerant flow path 20a). Specifically, when the narrowing portion 45 is provided downstream of the one heat exchange unit 30a, the amount of reduction of the refrigerant flowing into the one heat exchange unit 30a with respect to the amount in which the flow path cross-sectional area is narrowed by the narrowing portion 45 (the amount of reduction of the minimum flow path cross-sectional area) can be made small, as compared with when the narrowing portion 45 is provided upstream of the one heat exchange unit 30a. The refrigerant increases in volume by absorbing heat in the heat exchange unit 30a and increases in the flow velocity downstream relative to upstream of the one heat exchange unit 30a, but the narrowing portion 45 is provided downstream of the one heat exchange unit 30a, and thereby can function easily as a passage resistance body. Consequently, even when the difference in flow volume between the refrigerant flowing through the one heat exchange unit 30a and the refrigerant flowing through the other heat exchange unit 30b is made large, and the ratio of distribution of refrigerant in the refrigerant distribution device 16 fluctuates, it is possible to reliably create a situation in which the one heat exchange unit 30a easily produces the degree of superheat. Then, by adjusting the flow volume of refrigerant flowing through the plurality of heat exchange units 30a, 30b in such a way that the degree of wetness of the refrigerant flowing out from the one heat exchange unit 30a is 0%, it is also possible to sufficiently reduce the degree of wetness of the refrigerant flowing out from the other heat exchange unit 30b. As a result of this, it is possible to effectively prevent a possibility that the refrigerant high in the degree of wetness is sucked in by the compressor C, causing a problem in the compressor C.

When the heat exchange areas of the plurality of heat exchange units 30a, 30b are equal to each other, and the plurality of batteries B are of the same specifications, the amount in which the flow path cross-sectional area of the downstream refrigerant flow path 22a is narrowed by the narrowing portion 45 is preferably determined as follows. That is, in order to reliably obtain the difference in flow volume and also to prevent the passage resistance to the refrigerant from becoming too high, it is preferred to determine in such a way that the minimum flow path cross-sectional area of the downstream refrigerant flow path 22a connected to the one heat exchange unit 30a and of the converging refrigerant inflow portion 25a connected to the said downstream refrigerant flow path 22a is 50% to 90% of the minimum flow path cross-sectional area of the downstream refrigerant flow path 22b connected to the other heat exchange unit 30b and of the converging refrigerant inflow portion 25b connected to the said downstream refrigerant flow path 22b, and it is preferred to determine in such a way that it is more preferably 60% to 80%, most preferably 70%.

Because the flow velocity of refrigerant is lower when the narrowing portion 45 is disposed upstream of one heat exchange unit 30a than when it is disposed downstream, the preferred ranges of the minimum cross-sectional area differ from each other. That is, it is preferred to determine in such a way that the minimum flow path cross-sectional area of the upstream refrigerant flow path 20a connected to the one heat exchange unit 30a and of the distributed refrigerant outflow portion 18a connected to the said upstream refrigerant flow path 20a is 40% to 80% of the minimum flow path cross-sectional area of the upstream refrigerant flow path 20b connected to the other heat exchange unit 30b and of the distributed refrigerant outflow portion 18b connected to the said upstream refrigerant flow path 20b, and it is preferred to determine in such a way that it is more preferably 50% to 70%, most preferably 60%.

In the example shown in Figs. 4 and 5, the narrowing portion 45 has the shape of a washer formed as a different body from the downstream refrigerant flow path 22a, and is disposed between the male fitting portion 22n formed at each of the downstream end portions of the first downstream refrigerant flow paths 22a1, 22b1 and the female fitting portion 22m formed at each of the upstream end portions of the second downstream refrigerant flow paths 22a2, 22b2. The narrowing portion 45 is formed as a different body from the downstream refrigerant flow path 22a, and thereby it is possible, when assembling the cooling apparatus 10, to dispose a narrowing portion 45 with an appropriate amount of narrowing, in consideration of the type of a vehicle on which to mount the cooling apparatus 10, the weather conditions in a selling area, and the like.

In the example shown in Fig. 1, the downstream detection device 40 measures the temperature of the refrigerant flowing through the downstream refrigerant flow path 22a. Specifically, the downstream detection device 40 is a temperature sensor which detects the surface temperature of the downstream refrigerant flow path 22a. The downstream refrigerant flow path 22a is formed of a high thermal conductivity material, for example, aluminum alloy in such a way that the temperature of the refrigerant flowing inside the downstream refrigerant flow path 22a can be detected by detecting the surface temperature of the downstream refrigerant flow path 22a. Information on the temperature detected by the downstream detection device 40 is inputted into the ECU 60, and thereby the ECU 60 can determine the degree of wetness and superheat of the refrigerant flowing out from the one heat exchange unit 30a and adjust the valve opening degree of the expansion device 14. In the illustrated example, the ECU 60 compares the temperature of the refrigerant flowing into the one heat exchange unit 30a and the temperature of the refrigerant flowing out from the one heat exchange unit 30a and thereby determines the degree of wetness and superheat of the refrigerant flowing out from the one heat exchange unit 30a. Because of this, in the illustrated example, the cooling apparatus 10 further includes an upstream detection device 50 which detects the temperature of the refrigerant after having expanded in the expansion device 14 and before flowing into the heat exchange units 30a, 30b. Specifically, the upstream detection device 50 is a temperature sensor which detects the surface temperature of the upstream refrigerant flow path 20a. The upstream refrigerant flow path 20a is formed of a high thermal conductivity material, for example, aluminum alloy in such a way that the temperature of the refrigerant flowing inside the upstream refrigerant flow path 20a can be detected by detecting the surface temperature of the upstream refrigerant flow path 20a. Information on the temperature detected by the upstream detection device 50 is inputted into the ECU 60, and thereby the ECU 60 can compare the temperature of the refrigerant flowing into the one heat exchange unit 30a and the temperature of the refrigerant flowing out from the one heat exchange unit 30a.

Hereinafter, a description will be given, with reference to Fig. 6, of the operation of the cooling apparatus 10 connected to the refrigeration cycle 1. Fig. 6 shows one example in which the above-described cooling apparatus 10 is connected to the refrigeration cycle 1 of a vehicle air conditioning system. The refrigeration cycle 1 has an outdoor heat exchanger 3 provided in a refrigerant circulation path 2, an indoor heat exchanger 4, the compressor C, and an expansion valve 5. The outdoor heat exchanger 3 is disposed, for example, behind a front grill of a vehicle. The indoor heat exchanger 4 is disposed, for example, in a blow path of the air conditioning system. The vehicle air conditioning system carries out vehicle indoor air-conditioning in the manner well known by one skilled in the art.

The refrigerant lead-in portion 12 and refrigerant lead-out portion 27 of the cooling apparatus 10 are, respectively, connected to pipelines 6 connected to a diverging point 2a and a converging point 2b which are set on the refrigerant circulation path 2. It is preferred that the expansion valve 5 functions as a shut-off valve.

Fast charging of the batteries B is usually carried out while a vehicle stops (parks itself). During the fast charging of the batteries B, when the refrigerant does not have to be caused to flow to the indoor heat exchanger 4, the expansion valve 5 operates as a shut-off valve. Consequently, at this time, the outdoor heat exchanger 3, the cooling apparatus 10, and the compressor C configure a refrigeration cycle with which to cool the batteries B. During the fast charging of the batteries B, when the refrigerant has to be caused to flow to the indoor heat exchanger 4, the expansion valve 5 and the expansion device 14 of the cooling apparatus 10 operate as expansion valves. Consequently, at this time, the refrigerant discharged from the compressor C passes through the outdoor heat exchanger 3, and diverges at the diverging point 2a, and one refrigerant flows to the expansion valve 5 and the indoor heat exchanger 4, while the other refrigerant flows to the cooling apparatus 10. After that, the two refrigerant flows converge at the converging point 2b, and the converged refrigerant flow is sucked in by the compressor C. Consequently, at this time too, a refrigeration cycle with which to cool the batteries B is configured.

The plurality of heat exchange units 30a, 30b of the cooling apparatus 10 operate as evaporators in the refrigeration cycle 1 for cooling the batteries B. In the refrigeration cycle 1 shown in Fig. 6, the refrigerant in a low-temperature and low-pressure gas state, by flowing into (being sucked in by) the compressor C and being compressed in the compressor C, turns into a high-temperature and high-pressure gas state. Subsequently, the refrigerant is cooled by exchanging heat with surrounding air (ambient air) in the outdoor heat exchanger 3 which operates as a condenser, and turns into a medium-temperature and high-pressure liquid. Subsequently, the refrigerant expands when passing through the expansion device 14 of the cooling apparatus 10 and turns into a low-temperature and low-pressure liquid or a gas-liquid mixture fluid. Subsequently, the refrigerant is distributed to the plurality of upstream refrigerant flow paths 20a, 20b by the refrigerant distribution device 16. Subsequently, the refrigerant flows into the plurality of heat exchange units 30a, 30b which operate as evaporators. The refrigerant, when passing through the plurality of heat exchange units 30a, 30b, vaporizes by exchanging heat with the batteries B, draws heat from the batteries B due to the heat of vaporization, and turns into a low-temperature and low-pressure gas. Then the refrigerant flows into the plurality of downstream refrigerant flow paths 22a, 22b and converges in the refrigerant converging device 24. Subsequently, the refrigerant flows into the pipeline 6 from the refrigerant lead-out portion 27 and is returned to (sucked in by) the compressor C again and compressed.

The temperature of the refrigerant flowing through the upstream refrigerant flow path 20a and the downstream refrigerant flow path 22a which are connected to the one heat exchange unit 30a is always detected by the upstream detection device 50 and the downstream detection device 40, and information on the detected temperature is sent to the ECU 60. The ECU 60, based on the information obtained from the upstream detection device 50 and the downstream detection device 40, determines the degree of wetness and superheat of the refrigerant flowing through the downstream refrigerant flow path 22a and, based on the result of determination, adjusts the valve opening degree of the expansion device 14. Specifically, the ECU 60, when determining that the degree of superheat of the refrigerant flowing through the downstream refrigerant flow path 22a is of a predetermined value or higher, controls the expansion device 14 to expand the valve opening degree thereof. By so doing, the flow volume of refrigerant to the heat exchanger 30a is increased, making the degree of superheat of the refrigerant flowing through the downstream refrigerant flow path 22a lower than the predetermined value. Also, the ECU 60, when determining that the degree of wetness of the refrigerant flowing through the downstream refrigerant flow path 22a is 0% and that the degree of superheat thereof is lower than the predetermined value, controls the expansion device 14 in such a way that the valve opening degree thereof is maintained. Also, the ECU 60, when determining that the degree of wetness of the refrigerant flowing through the downstream refrigerant flow path 22a is higher than 0%, controls the expansion device 14 in such a way that the valve opening degree thereof is further reduced. By so doing, the flow volume of refrigerant to the heat exchanger 30a is reduced to decrease the liquid refrigerant flowing through the downstream refrigerant flow path 22a, avoiding a problem of the compressor C.

A description has heretofore been given, with reference to Figs. 1 to 6, of the cooling apparatus 10 according to the present embodiment, but the entire configuration of the cooling apparatus 10 is not limited to the above-described one. Various modifications can be made to the entire configuration of the cooling apparatus 10 shown in Figs. 1 to 6.

For example, in the illustrated example, the plurality of refrigerant flow paths 20a, 20b, 22a, 22b are formed in such a way that the flow volume of refrigerant in one heat exchange unit 30a, out of the plurality of heat exchange units 30a, 30b, is smaller than the flow volume of refrigerant in another heat exchange unit 30b, but the configuration is not limited to this. The plurality of distributed refrigerant outflow portions 18a, 18b or the plurality of converging refrigerant inflow portions 25a, 25b may be formed in such a way that the flow volume of refrigerant in the one heat exchange unit 30a is smaller than the flow volume of refrigerant in the other heat exchange unit 30b. In this case too, when the flow volume of refrigerant flowing through the plurality of heat exchange units 30a, 30b is not sufficient, the refrigerant in the one heat exchange unit 30a, out of the plurality of heat exchange units 30a, 30b, inevitably comes to have a degree of superheat of a predetermined value or higher.

Also, in this case, the cooling apparatus 10 may be configured as follows in such a way that the flow volume of refrigerant in the one heat exchange unit 30a is smaller than the flow volume of refrigerant in the other heat exchange unit 30b. That is, the converging refrigerant inflow portion 25a may be formed in such a way that the minimum flow path cross-sectional area of the downstream refrigerant flow path 22a connected to the one heat exchange unit 30a and of the converging refrigerant inflow portion 25a connected to the said downstream refrigerant flow path 22a is smaller than the minimum flow path cross-sectional area of the downstream refrigerant flow path 22b connected to the other heat exchange unit 30b and of the converging refrigerant inflow portion 25b connected to the said downstream refrigerant flow path 22b. Alternatively, the distributed refrigerant outflow portion 18a may be formed in such a way that the minimum flow path cross-sectional area of the upstream refrigerant flow path 20a connected to the one heat exchange unit 30a and of the distributed refrigerant outflow portion 18a connected to the said upstream refrigerant flow path 20a is smaller than the minimum flow path cross-sectional area of the upstream refrigerant flow path 20b connected to the other heat exchange unit 30b and of the distributed refrigerant outflow portion 18b connected to the said upstream refrigerant flow path 20b.

Specifically, the converging refrigerant inflow portion 25a may be provided with the narrowing portion 45 which defines the minimum flow path cross-sectional area of the converging refrigerant inflow portion 25a and of the downstream refrigerant flow path 22a to which is connected the said converging refrigerant inflow portion 25a. Alternatively, the distributed refrigerant outflow portion 18a may be provided with the narrowing portion 45 which defines the minimum flow path cross-sectional area of the said distributed refrigerant outflow portion 18a and of the upstream refrigerant flow path 20a connected to the said distributed refrigerant outflow portion 18a.

As described above, when the narrowing portion 45 is provided downstream of the one heat exchange unit 30a, the flow volume of refrigerant flowing through the plurality of heat exchange units 30a, 30b can be appropriately adjusted, as compared with when the narrowing portion 45 is provided upstream of the one heat exchange unit 30a. Consequently, when the narrowing portion 45 is provided in the downstream refrigerant flow path 22a connected to the one heat exchange unit 30a or in the converging refrigerant inflow portion 25a connected to the said downstream refrigerant flow path 22a, the flow volume of refrigerant flowing through the plurality of heat exchange units 30a, 30b can be appropriately adjusted, as compared with when the narrowing portion 45 is provided in the upstream refrigerant flow path 20a connected to the one heat exchange unit 30a or in the distributed refrigerant outflow portion 18a connected to the said upstream refrigerant flow path 20a.

Also, in the above-described example, the narrowing portion 45 is formed as a different body from the downstream refrigerant flow path 22a, but may be formed integral therewith. Also, when the narrowing portion 45 is provided in the upstream refrigerant flow path 20a, the distributed refrigerant outflow portion 18a, or the converging refrigerant inflow portion 25a, too, the narrowing portion 45 may be formed as a different body from the upstream refrigerant flow path 20a, the distributed refrigerant outflow portion 18a, or the converging refrigerant inflow portion 25a, or may be formed integral therewith. When the narrowing portion 45 is formed as a different body from the upstream refrigerant flow path 20a, the downstream refrigerant flow path 22a, the distributed refrigerant outflow portion 18a, or the converging refrigerant inflow portion 25a, it is possible, when assembling the cooling apparatus 10, to dispose a narrowing portion 45 with an appropriate amount of narrowing, in consideration of the type of a vehicle on which to mount the cooling apparatus 10, the weather conditions in a selling area, and the like. Also, when the narrowing portion 45 is formed integral with the upstream refrigerant flow path 20a, the downstream refrigerant flow path 22a, the distributed refrigerant outflow portion 18a, or the converging refrigerant inflow portion 25a, it is possible, when assembling the cooling apparatus 10, to prevent the narrowing portion 45 from being disposed in a wrong position and also to reduce assembly man-hours.

Also, in the above-described example, the downstream detection device 40 and the upstream detection device 50 are temperature sensors, but the configuration is not limited to this. The downstream detection device 40 and the upstream detection device 50 may each be a pressure-temperature sensor which detects the pressure and temperature of the refrigerant flowing through the downstream refrigerant flow path 22a and the upstream refrigerant flow path 20a. Also, in the above-described example, the cooling apparatus 10 includes the upstream detection device 50, but the configuration is not limited to this. For example, when the downstream refrigerant flow path 22a is a pressure-temperature sensor, the cooling apparatus 10 does not have to include the upstream detection device 50. In this case, the ECU 60, based on the information of the pressure and temperature detected by the downstream detection device 40, determines the degree of wetness and superheat of the refrigerant flowing through the downstream refrigerant flow path 22a. Also, when the expansion device 14 or the refrigerant distribution device 16 has in itself the function of detecting the temperature or pressure of the refrigerant after having expanded in the expansion device 14, the cooling apparatus 10 does not have to include the upstream detection device 50.

Furthermore, in the illustrated example, the cooling apparatus 10 includes the two heat exchange units 30a, 30b, but the configuration is not limited to this. The cooling apparatus 10 may include three or more heat exchange units.

When the cooling apparatus 10 includes a number N, which is an integer greater than or equal to three, of heat exchange units, the narrowing portion 45 may be provided in a plurality of upstream refrigerant flow paths or a plurality of downstream refrigerant flow paths, which are connected to a plurality, two or more and N-1 or less, of heat exchange units, or in a plurality of distributed refrigerant outflow portions or a plurality of converging refrigerant inflow portions, which are connected to the said respective plurality of refrigerant flow paths. Also, the downstream detection device 40 may be provided in a plurality of downstream refrigerant flow paths connected to the two or more and N-1 or less heat exchange units. Then, in this case, the valve opening degree of the expansion device 14 may be adjusted based on the degree of wetness and superheat of refrigerant flowing through the plurality of downstream refrigerant flow paths connected respectively to the two or more and N-1 or less heat exchange units. However, the narrowing portion 45 is provided in only one downstream refrigerant flow path or only one upstream refrigerant flow path, which is connected to only one heat exchange unit, out of the plurality of heat exchange units, or in only one distributed refrigerant outflow portion or only one converging refrigerant inflow portion, which is connected to the said corresponding refrigerant flow path, and the downstream detection device 40 is provided in the only one downstream refrigerant flow path connected to the only one heat exchange unit, thereby enabling the cost of the downstream detection device 40 to be most effectively lowered.

Also, in the illustrated example, each of the heat exchange units 30a, 30b includes the single heat exchanger 31, but the configuration is not limited to this. Each of the heat exchange units 30a, 30b may be configured of a plurality of heat exchangers 31 caused to fluidically communicate with each other.

Also, the plurality of tubes 34 of the heat exchanger 31 have been described to be disposed in the vertical direction, but may be disposed in the horizontal direction. The direction in which to dispose the plurality of tubes 34 is appropriately selected in response to the layout of a vehicle.

As above, according to the present embodiment and the modification example thereof, the cooling apparatus 10 which, being connected to the refrigeration cycle 1, cools the plurality of batteries B for a vehicle includes the refrigerant lead-in portion 12 through which to lead in the refrigerant which exchanges heat with the batteries B, the expansion device 14 which expands the refrigerant led in from the refrigerant lead-in portion 12, the refrigerant distribution device 16 which, having the expanded refrigerant inflow portion 17 into which the refrigerant having expanded in the expansion device 14 flows and the plurality of distributed refrigerant outflow portions 18a, 18b, distributes the refrigerant flowing in from the expanded refrigerant inflow portion 17 to the plurality of distributed refrigerant outflow portions 18a, 18b, the plurality of upstream refrigerant flow paths 20a, 20b connected respectively to the plurality of distributed refrigerant outflow portions 18a, 18b of the refrigerant distribution device 16, the plurality of heat exchange units 30a, 30b which, being connected respectively to the plurality of upstream refrigerant flow paths 20a, 20b, carry out heat exchange between the refrigerants flowing through the heat exchange units 30a, 30b and the corresponding batteries B, the plurality of downstream refrigerant flow paths 22a, 22b which are connected respectively to the plurality of heat exchange units 30a, 30b and into which the refrigerants having exchanged heat with the batteries B flow, and the refrigerant converging device 24 which, having the plurality of converging refrigerant inflow portions 25a, 25b connected respectively to the plurality of downstream refrigerant flow paths 22a, 22b, converges the refrigerants having flowed through the plurality of downstream refrigerant flow paths 22a, 22b, and also has the converged refrigerant outflow portion 26 which causes the converged refrigerant to flow out to the refrigeration cycle 1. Then, the plurality of distributed refrigerant outflow portions 18a, 18b, the plurality of upstream refrigerant flow paths 20a, 20b, the plurality of downstream refrigerant flow paths 22a, 22b, or the plurality of converging refrigerant inflow portions 25a, 25b are formed in such a way that the flow volume of refrigerant in one heat exchange unit 30a, out of the plurality of heat exchange units 30a, 30b, is smaller than the flow volume of refrigerant in the other heat exchange unit 30b, and the downstream refrigerant flow path 22a connected to the one heat exchange unit 30a is provided with the downstream detection device 40 which detects the temperature, or the temperature and pressure, of the refrigerant in the said downstream refrigerant flow path 22a.

The cooling apparatus 10 is configured in this way, and thereby the refrigerant inevitably comes to have the degree of superheat in a specific heat exchange unit 30a when the flow volume of refrigerant flowing through the plurality of heat exchange units 30a, 30b is not sufficient. Then, the degree of wetness and superheat of the refrigerant flowing out from the specific heat exchange unit 30a is detected in the downstream detection device 40, and the valve opening degree of the expansion device 14 is adjusted in such a way that the degree of wetness of the said refrigerant is 0% and the degree of superheat is not of a predetermined value or higher, whereby the flow volume of refrigerant flowing through the plurality of heat exchange units 30a, 30b can be adjusted to an appropriate volume even without providing detection devices in all the respective downstream refrigerant flow paths 22a, 22b connected respectively to the heat exchange units 30a, 30b. Specifically, the flow volume of both refrigerants flowing through the plurality of heat exchange units 30a, 30b can be reduced to a minimum volume which does not have a degree of superheat of a predetermined value or higher.

Specifically, the flow volume of refrigerant in the one heat exchange unit 30a is smaller than the flow volume of refrigerant in the other heat exchange unit 30b because the minimum flow path cross-sectional area of the upstream refrigerant flow path 20a connected to the one heat exchange unit 30a and of the distributed refrigerant outflow portion 18a connected to the said upstream refrigerant flow path 20a is smaller than the minimum flow path cross-sectional area of the upstream refrigerant flow path 20a connected to the other heat exchange unit 30b and of the distributed refrigerant outflow portion 18b connected to the said upstream refrigerant flow path 20b, or because the minimum flow path cross-sectional area of the downstream refrigerant flow path 22a connected to the one heat exchange unit 30a and of the converging refrigerant inflow portion 25a connected to the said downstream refrigerant flow path 22a is smaller than the minimum flow path cross-sectional area of the downstream refrigerant flow path 22a connected to the other heat exchange unit 30b and of the converging refrigerant inflow portion 25b connected to the said downstream refrigerant flow path 22b.

Furthermore, specifically, the upstream refrigerant flow path 20a or the downstream refrigerant flow path 22a, which is connected to the one heat exchange unit 30a, or the distributed refrigerant outflow portion 18a or the converging refrigerant inflow portion 25a, which is connected to the said respective refrigerant flow path 20a, 22a, is provided with the narrowing portion 45 which defines the minimum flow path cross-sectional area of the said upstream refrigerant flow path 20a and of the said distributed refrigerant outflow portion 18a or with the minimum flow path cross-sectional area of the said downstream flow path 22a and of the said converging refrigerant inflow portion 25a.

When the narrowing portion 45 is provided in the downstream refrigerant flow path 22a connected to the one heat exchange unit 30a or in the converging refrigerant inflow portion 25a connected to the said downstream refrigerant flow path 22a, the flow volume of refrigerant flowing through the plurality of heat exchange units 30a, 30b can be appropriately adjusted, as compared with when the narrowing portion 45 is provided in the upstream refrigerant flow path 20a connected to the one heat exchange unit 30a or in the distributed refrigerant outflow portion 18a connected to the said upstream refrigerant flow path 20a.

Also, when the narrowing portion 45 is provided in the upstream refrigerant flow path 20a or the downstream refrigerant flow path 22a, which is connected to only one heat exchange unit 30a, out of the plurality of heat exchange units 30a, 30b, or in the distributed refrigerant outflow portion 18a or the converging refrigerant inflow portion 25a, which is connected to the said respective refrigerant flow path 20a, 22a, the downstream detection device 40 only has to be provided in only one downstream refrigerant flow path 22a connected to the only one heat exchange unit 30a, so that it is possible to most effectively lower the cost of the downstream detection device 40.

Also, according to the present embodiment and the modification example thereof, the narrowing portion 45 is formed as a different body from the upstream refrigerant flow path 20a or the downstream refrigerant flow path 22a, which is connected to the one heat exchange unit 30a or from the distributed refrigerant outflow portion 18a or the converging refrigerant inflow portion 25a, which is connected to the said respective refrigerant flow path 20a, 22a. In this case, it is possible, when assembling the cooling apparatus 10, to dispose a narrowing portion 45 with an appropriate amount of narrowing, in consideration of the type of a vehicle on which to mount the cooling apparatus 10, the weather conditions in a selling area, and the like.

Also, according to the modification example of the present embodiment, the narrowing portion 45 is formed integral with the upstream refrigerant flow path 20a or the downstream refrigerant flow path 22a, which is connected to the one heat exchange unit 30a, or with the distributed refrigerant outflow portion 18a or the converging refrigerant inflow portion 25a, which is connected to the said respective refrigerant flow path 20a, 22a. In this case, it is possible, when assembling the cooling apparatus 10, to prevent the narrowing portion 45 from being disposed in a wrong position and also to reduce assembly man-hours.

Also, according to the present embodiment, the cooling apparatus 10 further includes the upstream detection device 50 which detects the temperature or pressure of the refrigerant after having expanded in the expansion device 14 and before flowing into the heat exchange units 30a, 30b. In this case, the temperature of the refrigerant flowing into the one heat exchange unit 30a, which is detected by the upstream detection device 50, and the temperature of the refrigerant flowing out from the one heat exchange unit 30a, which is detected by the downstream detection unit 40, are compared with each other, and thereby it is possible to determine the degree of wetness and superheat of the refrigerant flowing out from the one heat exchange unit 30a.

### Industrial Applicability

The air conditioning system according to the present invention can be industrially manufactured and also can be subjected to commercial transaction, so that it has economic values and can be applied to industrial use.

### Reference Signs List

1 refrigeration cycle, 10 cooling apparatus, 14 expansion device, 16 refrigerant distribution device, 20a, 20b upstream refrigerant flow path, 22a, 22b downstream refrigerant flow path, 24 refrigerant converging device, 30a, 30b heat exchange unit, 40 downstream detection device, 50 upstream detection device, 60 ECU, C compressor

## Claims

1. A cooling apparatus (10) configured for connection to a refrigeration cycle (1), wherein the cooling apparatus (10) comprises a plurality of batteries (B) for a vehicle and cools said batteries (B), and wherein the cooling apparatus (10) includes:
a refrigerant lead-in portion (12) which leads in a refrigerant which exchanges heat with the batteries (B);
an expansion device (14) which expands the refrigerant led in from the refrigerant lead-in portion (12);
a refrigerant distribution device (16) which, having an expanded refrigerant inflow portion (17) into which the refrigerant which has expanded in the expansion device (14) flows and a plurality of distributed refrigerant outflow portions (18a, 18b), distributes the refrigerant having flowed in from the expanded refrigerant inflow portion (17) to the plurality of distributed refrigerant outflow portions (18a, 18b);
a plurality of upstream refrigerant flow paths (20a, 20b) connected respectively to the plurality of distributed refrigerant outflow portions (18a, 18b) of the refrigerant distribution device (16);
a plurality of heat exchange units (30a, 30b) which, being connected respectively to the plurality of upstream refrigerant flow paths (20a, 20b), carry out heat exchange between the refrigerant flowing through the respective heat exchange units and the corresponding batteries (B);
a plurality of downstream refrigerant flow paths (22a, 22b) which are connected respectively to the plurality of heat exchange units (30a, 30b) and into which the refrigerant having exchanged heat with the batteries (B) flow; and
a refrigerant converging device (24) which has a converged refrigerant outflow portion (26) which, having a plurality of converging refrigerant inflow portions (25a, 25b) connected respectively to the plurality of downstream refrigerant flow paths (22a, 22b), converges the refrigerant having flowed through the plurality of downstream refrigerant flow paths (22a, 22b) and also is configured for causing the converged refrigerant to flow out to the refrigeration cycle (1),
wherein
the plurality of distributed refrigerant outflow portions (18a, 18b), the plurality of upstream refrigerant flow paths (20a, 20b), the plurality of downstream refrigerant flow paths (22a, 22b), or the plurality of converging refrigerant inflow portions (25a, 25b) are formed in such a way that the flow volume of refrigerant in one first heat exchange unit (30a), out of the plurality of heat exchange units (30a, 30b), is smaller than the flow volume of refrigerant in another second one of the heat exchange units (30b), the cooling apparatus (10) being **characterized in that**
a first one of the downstream refrigerant flow paths (22a) connected to the first heat exchange unit (30a) is provided with a downstream detection device (40) which detects the temperature, or the temperature and pressure, of the refrigerant in the said first downstream refrigerant flow path (22a),
the cooling apparatus (10) further including:
an upstream detection device (50) which detects the temperature or pressure of the refrigerant after having expanded in the expansion device (14) and before flowing into the heat exchange units (30a, 30b).

2. The cooling apparatus (10) according to claim 1, **characterized in that**
the flow volume of refrigerant in the first heat exchange unit (30a) is smaller than the flow volume of refrigerant in the second heat exchange unit (30b) because the minimum flow path cross-sectional area of the first one of the upstream refrigerant flow paths (20a) which is connected to the first heat exchange unit (30a) and of the first one of the distributed refrigerant outflow portions (18a) which is connected to the said first upstream refrigerant flow path (20a), is smaller than the minimum flow path cross-sectional area of the second one of the upstream refrigerant flow paths (20b) which is connected to the second heat exchange unit (30b) and of the second one of the distributed refrigerant outflow portions (18b) which is connected to the said second upstream refrigerant flow path (20b), or because the minimum flow path cross-sectional area of the first downstream refrigerant flow path (22a) connected to the first heat exchange unit (30a) and of the first one of the converging refrigerant inflow portions (25a) which is connected to the said first downstream refrigerant flow path (22a), is smaller than the minimum flow path cross-sectional area of the second one of the downstream refrigerant flow paths (22b) which is connected to the second heat exchange unit (30b) and of the second one of the converging refrigerant inflow portions (25b) which is connected to the said second downstream refrigerant flow path (22b).

3. The cooling apparatus (10) according to claim 2, **characterized in that**
the first upstream refrigerant flow path (20a) or the first downstream refrigerant flow path (22a), which is connected to the first heat exchange unit (30a), or the first distributed refrigerant outflow portion (18a) or the first converging refrigerant inflow portion (25a), which is connected to the said respective first upstream or first downstream refrigerant flow path (20a, 22a), is provided with a narrowing portion (45) which defines the minimum flow path cross-sectional area of the said first upstream refrigerant flow path (20a) and of the said first distributed refrigerant outflow portion (18a) or the minimum flow path cross-sectional area of the said first downstream refrigerant flow path (22a) and of the said first converging refrigerant inflow portion (25a).

4. The cooling apparatus (10) according to claim 3, **characterized in that** the narrowing portion (45) is provided in the first downstream refrigerant flow path (22a) which is connected to the first heat exchange unit (30a) or in the first converging refrigerant inflow portion (25a) which is connected to the said first downstream refrigerant flow path (22a).

5. The cooling apparatus (10) according to claim 3 or 4, **characterized in that**
the narrowing portion (45) is provided in the first upstream refrigerant flow path (20a) or the first downstream refrigerant flow path (22a), which is connected to only the first heat exchange unit (30a), out of the plurality of heat exchange units (30a, 30b), or in the first distributed refrigerant outflow portion (18a) or the first converging refrigerant inflow portion (25a), which is connected to the said respective first upstream or first downstream refrigerant flow path (20a, 22a).

6. The cooling apparatus (10) according to any one of claims 3 to 5, **characterized in that**
the narrowing portion (45) is formed as a different body from the first upstream refrigerant flow path (20a) or the first downstream refrigerant flow path (22a), which is connected to the first heat exchange unit (30a), or from the first distributed refrigerant outflow portion (18a) or the first converging refrigerant inflow portion (25a), which is connected to the said respective first upstream or first downstream refrigerant flow path (20a, 22a).

7. The cooling apparatus (10) according to any one of claims 3 to 5, **characterized in that**
the narrowing portion (45) is formed integral with the first upstream refrigerant flow path (20a) or the first downstream refrigerant flow path (22a), which is connected to the first heat exchange unit (30a), or with the first distributed refrigerant outflow portion (18a) or the first converging refrigerant inflow portion (25a), which is connected to the said respective first upstream or first downstream refrigerant flow path (20a, 22a).

## Patentansprüche

1. Kühlvorrichtung (10), die zum Anschluss an einen Kältekreislauf (1) konfiguriert ist, wobei die Kühlvorrichtung eine Vielzahl von Batterien (B) für ein Fahrzeug umfasst und die besagten Batterien kühlt, und wobei die Kühlvorrichtung umfasst:
∘ einen Kältemittel-Einlassteil (12), der ein Kältemittel einleitet, das Wärme mit den Batterien (B) austauscht;
∘ eine Expansionsvorrichtung (14), die das vom Kältemittel-Einlassteil (12) eingeleitete Kältemittel expandiert;
∘ eine Kältemittel-Verteilungsvorrichtung (16), die, mit einem expandierten Kältemittel-Einlassteil (17), in den das in der Expansionsvorrichtung (14) expandierte Kältemittel strömt, und einer Vielzahl von verteilten Kältemittel-Auslassteilen (18a, 18b), das vom expandierten Kältemittel-Einlassteil (17) geströmte Kältemittel an die Vielzahl von verteilten Kältemittel-Auslassteilen (18a, 18b) verteilt;
∘ eine Vielzahl von stromaufwärtigen Kältemittel-Strömungswegen (20a, 20b), die jeweils mit der Vielzahl von verteilten Kältemittel-Auslassteilen (18a, 18b) der Kältemittel-Verteilungsvorrichtung (16) verbunden sind;
∘ eine Vielzahl von Wärmetauschereinheiten (30a, 30b), die, jeweils mit der Vielzahl von stromaufwärtigen Kältemittel-Strömungswegen (20a, 20b) verbunden, einen Wärmeaustausch zwischen den durch die jeweiligen Wärmetauschereinheiten strömenden Kältemitteln und den entsprechenden Batterien (B) durchführen;
∘ eine Vielzahl von stromabwärtigen Kältemittel-Strömungswegen (22a, 22b), die jeweils mit der Vielzahl von Wärmetauschereinheiten (30a, 30b) verbunden sind und in die die Kältemittel strömen, die Wärme mit den Batterien (B) ausgetauscht haben; und
∘ eine Kältemittel-Zusammenführungsvorrichtung (24), die einen zusammengeführten Kältemittel-Auslassteil (26) aufweist, der, mit einer Vielzahl von zusammenführenden Kältemittel-Einlassteilen (25a, 25b), die jeweils mit der Vielzahl von stromabwärtigen Kältemittel-Strömungswegen (22a, 22b) verbunden sind, die durch die Vielzahl von stromabwärtigen Kältemittel-Strömungswegen (22a, 22b) geströmten Kältemittel zusammenführt und auch bewirkt, dass das zusammengeführte Kältemittel zum Kältekreislauf (1) strömt, wobei die Kühlvorrichtung (10) **dadurch gekennzeichnet ist, dass**
∘ die Vielzahl von verteilten Kältemittel-Auslassteilen (18a, 18b), die Vielzahl von stromaufwärtigen Kältemittel-Strömungswegen (20a, 20b), die Vielzahl von stromabwärtigen Kältemittel-Strömungswegen (22a, 22b) oder die Vielzahl von zusammenführenden Kältemittel-Einlassteilen (25a, 25b) so ausgebildet sind, dass das Strömungsvolumen des Kältemittels in einer Wärmetauschereinheit (30a) aus der Vielzahl von Wärmetauschereinheiten (30a, 30b) kleiner ist als das Strömungsvolumen des Kältemittels in einer anderen Wärmetauschereinheit (30b), und dass
∘ der stromabwärtige Kältemittel-Strömungsweg (22a), der mit der Wärmetauschereinheit (30a) verbunden ist, mit einer stromabwärtigen Erfassungsvorrichtung (40) versehen ist, die die Temperatur oder die Temperatur und den Druck des Kältemittels in dem besagten stromabwärtigen Kältemittel-Strömungsweg (22a) erfasst, wobei die Kühlvorrichtung (10) ferner umfasst: eine stromaufwärtige Erfassungsvorrichtung (50), die die Temperatur oder den Druck des Kältemittels nach seiner Expansion in der Expansionsvorrichtung (14) und vor seinem Eintritt in die Wärmetauschereinheiten (30a, 30b) erfasst.

2. Kühlvorrichtung (10) nach Anspruch 1, **dadurch gekennzeichnet, dass** das Strömungsvolumen des Kältemittels in der ersten Wärmetauschereinheit (30a) kleiner ist als das Strömungsvolumen des Kältemittels in der anderen Wärmetauschereinheit (30b), weil die minimale Strömungsquerschnittsfläche des ersten der stromaufwärtigen Kältemittel-Strömungswege, Weg (20a), der mit der ersten Wärmetauschereinheit (30a) verbunden ist, und des ersten der verteilten Kältemittel-Auslassteile (18a), der mit dem besagten ersten stromaufwärtigen Kältemittel-Strömungsweg (20a) verbunden ist, kleiner ist als die minimale Strömungsquerschnittsfläche des zweiten der stromaufwärtigen Kältemittel-Strömungswege, Weg (20b), der mit der anderen Wärmetauschereinheit (30b) verbunden ist, und des zweiten der verteilten Kältemittel-Auslassteile, Teil (18b), der mit dem besagten zweiten stromaufwärtigen Kältemittel-Strömungsweg (20b) verbunden ist, oder weil die minimale Strömungsquerschnittsfläche des ersten stromabwärtigen Kältemittel-Strömungswegs (22a), der mit der ersten Wärmetauschereinheit (30a) verbunden ist, und des ersten der zusammenführenden Kältemittel-Einlassteile, Teil (25a), der mit dem besagten ersten stromabwärtigen Kältemittel-Strömungsweg (22a) verbunden ist, kleiner ist als die minimale Strömungsquerschnittsfläche des zweiten der stromabwärtigen Kältemittel-Strömungswege, Weg (22b), der mit der anderen Wärmetauschereinheit (30b) verbunden ist, und des zweiten der zusammenführenden Kältemittel-Einlassteile, Teil (25b), der mit dem besagten zweiten stromabwärtigen Kältemittel-Strömungsweg (22b) verbunden ist.

3. Kühlvorrichtung (10) nach Anspruch 2, **dadurch gekennzeichnet, dass** der erste stromaufwärtige Kältemittel-Strömungsweg (20a) oder der erste stromabwärtige Kältemittel-Strömungsweg (22a), der mit der ersten Wärmetauschereinheit (30a) verbunden ist, oder der erste verteilte Kältemittel-Auslassteil (18a) oder der erste zusammenführende Kältemittel-Einlassteil (25a), der mit dem besagten jeweiligen ersten stromaufwärtigen oder stromabwärtigen Kältemittel-Strömungsweg (20a, 22a) verbunden ist, mit einem Verengungsabschnitt (45) versehen ist, der die minimale Strömungsquerschnittsfläche des besagten ersten stromaufwärtigen Kältemittel-Strömungswegs (20a) und des besagten ersten verteilten Kältemittel-Auslassteils (18a) oder die minimale Strömungsquerschnittsfläche des besagten ersten stromabwärtigen Kältemittel-Strömungswegs (22a) und des besagten ersten zusammenführenden Kältemittel-Einlassteils (25a) definiert.

4. Kühlvorrichtung (10) nach Anspruch 3, **dadurch gekennzeichnet, dass** der Verengungsabschnitt (45) in dem ersten stromabwärtigen Kältemittel-Strömungsweg (22a), der mit der ersten Wärmetauschereinheit (30a) verbunden ist, oder in dem ersten zusammenführenden Kältemittel-Einlassteil (25a), der mit dem besagten ersten stromabwärtigen Kältemittel-Strömungsweg (22a) verbunden ist, vorgesehen ist.

5. Kühlvorrichtung (10) nach Anspruch 3 oder 4, **dadurch gekennzeichnet, dass** der Verengungsabschnitt (45) in dem ersten stromaufwärtigen Kältemittel-Strömungsweg (20a) oder dem ersten stromabwärtigen Kältemittel-Strömungsweg (22a), der nur mit einer ersten Wärmetauschereinheit (30a) aus der Vielzahl von Wärmetauschereinheiten (30a, 30b) verbunden ist, oder in dem ersten verteilten Kältemittel-Auslassteil (18a) oder dem ersten zusammenführenden Kältemittel-Einlassteil (25a), der mit dem besagten jeweiligen ersten stromaufwärtigen oder stromabwärtigen Kältemittel-Strömungsweg (20a, 22a) verbunden ist, vorgesehen ist.

6. Kühlvorrichtung (10) nach einem der Ansprüche 3 bis 5, **dadurch gekennzeichnet, dass** der Verengungsabschnitt (45) als ein vom ersten stromaufwärtigen Kältemittel-Strömungsweg (20a) oder dem ersten stromabwärtigen Kältemittel-Strömungsweg (22a), der mit der ersten Wärmetauschereinheit (30a) verbunden ist, oder vom ersten verteilten Kältemittel-Auslassteil (18a) oder dem ersten zusammenführenden Kältemittel-Einlassteil (25a), der mit dem besagten jeweiligen ersten stromaufwärtigen oder stromabwärtigen Kältemittel-Strömungsweg (20a, 22a) verbunden ist, verschiedener Körper ausgebildet ist.

7. Kühlvorrichtung (10) nach einem der Ansprüche 3 bis 5, **dadurch gekennzeichnet, dass** der Verengungsabschnitt (45) einstückig mit dem ersten stromaufwärtigen Kältemittel-Strömungsweg (20a) oder dem ersten stromabwärtigen Kältemittel-Strömungsweg (22a), der mit der ersten Wärmetauschereinheit (30a) verbunden ist, oder mit dem ersten verteilten Kältemittel-Auslassteil (18a) oder dem ersten zusammenführenden Kältemittel-Einlassteil (25a), der mit dem besagten jeweiligen ersten stromaufwärtigen oder stromabwärtigen Kältemittel-Strömungsweg (20a, 22a) verbunden ist, ausgebildet ist.

## Revendications

1. Appareil de refroidissement (10) configuré pour être connecté à un cycle de réfrigération (1), dans lequel l'appareil de refroidissement comprend une pluralité de batteries (B) pour un véhicule, et refroidit lesdites batteries, et dans lequel l'appareil de refroidissement comprend :
∘ une partie d'entrée de réfrigérant (12) qui introduit un réfrigérant qui échange de la chaleur avec les batteries (B) ;
∘ un dispositif d'expansion (14) qui dilate le réfrigérant introduit depuis la partie d'introduction de réfrigérant (12) ;
∘ un dispositif de distribution de réfrigérant (16) qui, comportant une partie d'entrée de réfrigérant détendu (17) dans laquelle s'écoule le réfrigérant qui s'est détendu dans le dispositif de détente (14) et une pluralité de parties de sortie de réfrigérant réparties (18a, 18b), distribue le réfrigérant qui s'est écoulé depuis la partie d'entrée de réfrigérant détendu (17) vers la pluralité de parties de sortie de réfrigérant réparties (18a, 18b) ;
∘ une pluralité de chemins d'écoulement de réfrigérant en amont (20a, 20b) reliés respectivement à la pluralité de parties de sortie de réfrigérant réparties (18a, 18b) du dispositif de distribution de réfrigérant (16) ;
∘ une pluralité d'unités d'échange thermique (30a, 30b) qui, étant reliées respectivement à la pluralité de chemins d'écoulement de réfrigérant en amont (20a, 20b), effectuent un échange thermique entre les réfrigérants s'écoulant à travers les unités d'échange thermique respectives et les batteries correspondantes (B) ;
∘ une pluralité de chemins d'écoulement de réfrigérant en aval (22a, 22b) qui sont respectivement reliés à la pluralité d'unités d'échange thermique (30a, 30b) et dans lesquels s'écoulent les réfrigérants ayant échangé de la chaleur avec les batteries (B) ; et
∘ un dispositif de convergence de réfrigérant (24) qui comporte une partie de sortie de réfrigérant convergent (26) qui, comportant une pluralité de parties d'entrée de réfrigérant convergentes (25a, 25b) reliées respectivement à la pluralité de chemins d'écoulement de réfrigérant en aval (22a, 22b), converge les réfrigérants ayant circulé à travers la pluralité de chemins d'écoulement de réfrigérant en aval (22a, 22b) et provoque également l'écoulement du réfrigérant convergé vers le cycle de réfrigération (1), l'appareil de refroidissement (10) étant **caractérisé en ce que**
∘ la pluralité de parties de sortie de réfrigérant réparties (18a, 18b), la pluralité de chemins d'écoulement de réfrigérant en amont (20a, 20b), la pluralité de chemins d'écoulement de réfrigérant en aval (22a, 22b) ou la pluralité de parties d'entrée de réfrigérant convergentes (25a, 25b) sont formées de telle manière que le volume d'écoulement du réfrigérant dans une unité d'échange thermique (30a), parmi la pluralité d'unités d'échange thermique (30a, 30b), est inférieur au volume d'écoulement du réfrigérant dans une autre unité d'échange thermique (30b), et que
∘ le trajet d'écoulement de réfrigérant en aval (22a) relié à l'unité d'échange thermique (30a) est muni d'un dispositif de détection en aval (40) qui détecte la température, ou la température et la pression, du réfrigérant dans ledit trajet d'écoulement de réfrigérant en aval (22a), L'appareil de refroidissement (10) comprenant en outre : un dispositif de détection amont (50) qui détecte la température ou la pression du réfrigérant après sa détente dans le dispositif de détente (14) et avant son entrée dans les unités d'échange thermique (30a, 30b).

2. Appareil de refroidissement (10) selon la revendication 1, **caractérisé en ce que** le volume d'écoulement du réfrigérant dans la première unité d'échange thermique (30a) est inférieur au volume d'écoulement du réfrigérant dans l'autre unité d'échange thermique (30b) parce que la section transversale minimale du chemin d'écoulement du premier des chemins d'écoulement de réfrigérant en amont, chemin (20a), qui est relié à la première unité d'échange thermique (30a) et de la première des parties de sortie de réfrigérant réparties (18a) qui est reliée audit premier chemin d'écoulement de réfrigérant en amont (20a), est inférieure à la section transversale minimale du chemin d'écoulement du second des chemins d'écoulement de réfrigérant en amont, chemin (20b), qui est relié à l'autre unité d'échange thermique (30b) et de la seconde des parties de sortie de réfrigérant réparties, partie (18b), qui est reliée audit second chemin d'écoulement de réfrigérant en amont (20b), ou parce que la section transversale minimale du chemin d'écoulement du premier chemin d'écoulement de réfrigérant en aval (22a) relié à la première unité d'échange thermique (30a) et de la première des parties d'entrée de réfrigérant convergentes, partie (25a), qui est reliée audit premier chemin d'écoulement de réfrigérant en aval (22a), est inférieure à la section transversale minimale du chemin d'écoulement du second des chemins d'écoulement de réfrigérant en aval, chemin (22b), qui est relié à l'autre unité d'échange thermique (30b) et de la seconde des parties d'entrée de réfrigérant convergentes, partie (25b), qui est reliée audit second chemin d'écoulement de réfrigérant en aval (22b).

3. Appareil de refroidissement (10) selon la revendication 2, **caractérisé en ce que** le premier chemin d'écoulement de réfrigérant en amont (20a) ou le premier chemin d'écoulement de réfrigérant en aval (22a), qui est relié à la première unité d'échange thermique (30a), ou la première partie de sortie de réfrigérant répartie (18a) ou la première partie d'entrée de réfrigérant convergente (25a), qui est reliée audit premier chemin d'écoulement de réfrigérant en amont ou en aval respectif (20a, 22a), est pourvu d'une portion de rétrécissement (45) qui définit la section transversale minimale dudit premier chemin d'écoulement de réfrigérant en amont (20a) et de ladite première partie de sortie de réfrigérant répartie (18a) ou la section transversale minimale dudit premier chemin d'écoulement de réfrigérant en aval (22a) et de ladite première partie d'entrée de réfrigérant convergente (25a).

4. Appareil de refroidissement (10) selon la revendication 3, **caractérisé en ce que** la portion de rétrécissement (45) est prévue dans le premier chemin d'écoulement de réfrigérant en aval (22a) qui est relié à la première unité d'échange thermique (30a) ou dans la première partie d'entrée de réfrigérant convergente (25a) qui est reliée audit premier chemin d'écoulement de réfrigérant en aval (22a).

5. Appareil de refroidissement (10) selon la revendication 3 ou 4, **caractérisé en ce que** la portion de rétrécissement (45) est prévue dans le premier chemin d'écoulement de réfrigérant en amont (20a) ou le premier chemin d'écoulement de réfrigérant en aval (22a), qui est relié à une seule première unité d'échange thermique (30a), parmi la pluralité d'unités d'échange thermique (30a, 30b), ou dans la première partie de sortie de réfrigérant répartie (18a) ou la première partie d'entrée de réfrigérant convergente (25a), qui est reliée audit premier chemin d'écoulement de réfrigérant en amont ou en aval respectif (20a, 22a).

6. Appareil de refroidissement (10) selon l'une quelconque des revendications 3 à 5, **caractérisé en ce que** la portion de rétrécissement (45) est formée comme un corps différent du premier chemin d'écoulement de réfrigérant en amont (20a) ou du premier chemin d'écoulement de réfrigérant en aval (22a), qui est relié à la première unité d'échange thermique (30a), ou de la première partie de sortie de réfrigérant répartie (18a) ou de la première partie d'entrée de réfrigérant convergente (25a), qui est reliée audit premier chemin d'écoulement de réfrigérant en amont ou en aval respectif (20a, 22a).

7. Appareil de refroidissement (10) selon l'une quelconque des revendications 3 à 5, **caractérisé en ce que** la portion de rétrécissement (45) est formée d'un seul tenant avec le premier chemin d'écoulement de réfrigérant en amont (20a) ou le premier chemin d'écoulement de réfrigérant en aval (22a), qui est relié à la première unité d'échange thermique (30a), ou avec la première partie de sortie de réfrigérant répartie (18a) ou la première partie d'entrée de réfrigérant convergente (25a), qui est reliée audit premier chemin d'écoulement de réfrigérant en amont ou en aval respectif (20a, 22a).
